(19) Europäisches Patentamt
European Patent Office
Office européen des brevets

(11) **EP 2 597 835 B1**

(12) **EUROPEAN PATENT SPECIFICATION**

(45) Date of publication and mention
of the grant of the patent:
**10.07.2019 Bulletin 2019/28**

(51) Int Cl.:
***H04L 25/03*** (2006.01)    ***H04L 25/06*** (2006.01)

(21) Application number: **12250174.5**

(22) Date of filing: **28.11.2012**

(54) **MIMO decoding system**

MIMO-Decodierungssystem

Système de décodage MIMO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2011 GB 201120541**

(43) Date of publication of application:
**29.05.2013 Bulletin 2013/22**

(73) Proprietor: **British Broadcasting Corporation London WC1A 1AA (GB)**

(72) Inventor: **Mr. Tuck Yeen Poon London, W12 7SB (GB)**

(74) Representative: **Loveless, Ian Mark Reddie & Grose LLP The White Chapel Building 10 Whitechapel High Street London E1 8QS (GB)**

(56) References cited:
• **JIANPENG YU ET AL: "Parallel SFSD MIMO detection with SOFT-HARD combination enumeration", SIGNAL PROCESSING SYSTEMS (SIPS), 2011 IEEE WORKSHOP ON, IEEE, 4 October 2011 (2011-10-04), pages 228-233, XP032029155, DOI: 10.1109/SIPS.2011.6088979 ISBN: 978-1-4577-1920-2**
• **STUDER C ET AL: "Soft-Output Sphere Decoding: Performance and Implementation Aspects", SIGNALS, SYSTEMS AND COMPUTERS, 2006. ACSSC '06. FORTIETH ASILOMA R CONFERENCE ON, IEEE, PI, 1 October 2006 (2006-10-01), pages 2071-2076, XP031081392, DOI: 10.1109/ACSSC.2006.355132 ISBN: 978-1-4244-0784-2**

**EP 2 597 835 B1**

**Description**

BACKGROUND OF THE INVENTION

This invention relates to decoding a MIMO radio frequency transmission method and to a receiver for use in such a method.

Reference should be made to the following documents by way of background:

[1] ETSI Standard ETS 300 744, Digital Broadcasting Systems for Television, Sound and Data Services; framing structure, channel coding and modulation for digital terrestrial television, 1997, the DVB-T Standard.

[2] European Patent Application 1221793 which describes the basic structure of a DVB-T receiver.

[3] European Patent Application 1821481 which describes a use of pilot signals for channel estimation.

[4] European Patent Application 2158736 which describes the use of MIMO techniques with DVB-T. [5] JIANPENG YU ET AL, "Parallel SFSD MIMO detection with SOFT-HARD combination enumeration" which discloses a way to search for counter-hypothesis points in sphere decoders: the way these are determined is by using estimates derived at the same time as node distance calculations are performed.

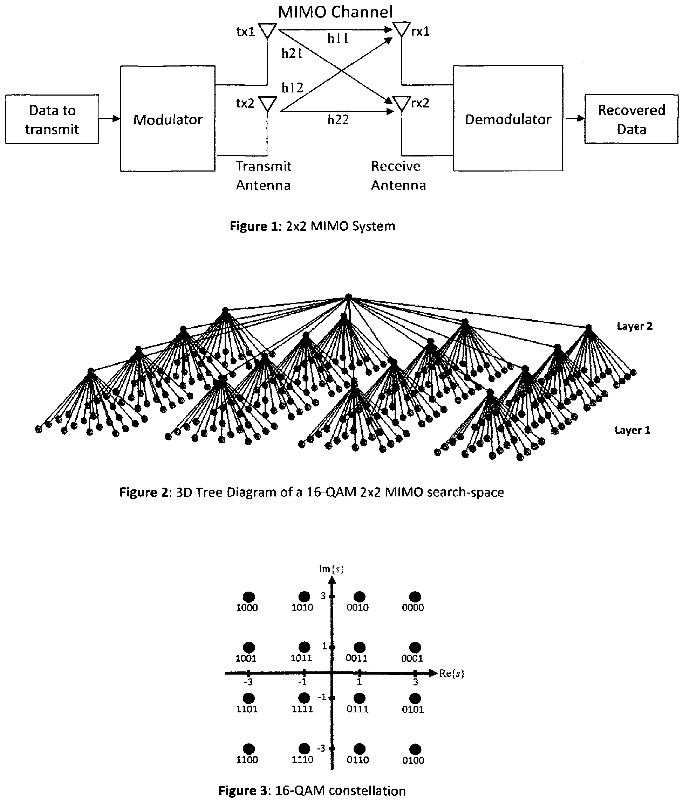

Methods of delivering terrestrial digital wireless television have been proposed which use Multiple-Input Multiple-Output (MIMO) techniques to allow dual transmission streams to be transmitted. In a typical basic system there are two transmit antennas and two receive antennas, with associated transmitters and receivers, as illustrated in Figure 1 of the accompanying drawings. Such a system can deliver up to twice the throughput of conventional Single-Input Single-Output (SISO) systems, whilst requiring no additional spectrum. More generally MIMO refers to a radio link employing at least two (two or more) transmitters and two or more receivers.

Our earlier European Patent 1821481 describes an OFDM-MIMO system in the form of a DVB-T system which is modified in that the phases of selected ones of the pilot signal transmissions, particularly the scattered pilots, are chosen or changed at the transmitters such that some of the corresponding pilot signal transmissions from the two (or more) MIMO transmitter stages are in the same phase and others of the transmissions are with relatively-inverted phase. At a receiver the pilot signals are extracted and combined by addition and subtraction of the inverted and non-inverted pilots, so as to obtain an indication of the transmission channel characteristics. Such modifications to the standard DVB-T transmission signal allow the receiver to have knowledge of the resulting 2-by-2 matrix channel.

Quadrature amplitude modulation (QAM) is a modulation scheme that operates by modulating the amplitudes of two carrier waves, using the amplitude-shift keying (ASK) digital modulation scheme or amplitude modulation (AM) analog modulation scheme. The two carrier waves, usually sinusoids, are out of phase with each other by 90° and are thus called quadrature carriers or quadrature components - hence the name of the scheme. The modulated waves are summed, and the resulting waveform is a combination of both phase-shift keying (PSK) and amplitude-shift keying (ASK), or (in the analog case) of phase modulation (PM) and amplitude modulation.

By representing a transmitted symbol (a number of bits) as a complex number and modulating a cosine and sine carrier signal with the real and imaginary parts (respectively), the symbol can be sent with two carriers on the same frequency. As the symbols are represented as complex numbers, they can be visualized as points on the complex plane. The real and imaginary axes are often called the in phase, or I-axis and the quadrature, or Q-axis. Plotting several symbols in a scatter diagram produces the constellation diagram. The points on a constellation diagram are called constellation points, each point representing a symbol. The number of bits conveyed by a symbol depends upon the nature of the QAM scheme. The number of points in the constellation grid is a power of 2 and this defines how many bits may be represented by each symbol. For example, 16-QAM has 16 points, this being $2^4$ giving 4 bits per symbol. 64-QAM has 64 points, this being $2^6$ giving 6 bits per symbol. 256-QAM has 256 point, this being $2^8$ giving 8 bits per symbol.

Upon reception of the signal, a demodulator examines the signal at points in time, determines the vector represented by the signal and attempts to select the point on the constellation diagram which is closest (in a Euclidean distance sense) to that of the received vector. Thus it will demodulate incorrectly if the corruption has caused the received vector to move closer to another constellation point than the one transmitted. The process of determining the likely bit sequences represented by the QAM signal may be referred to as demodulation or decoding.

In a transmission scheme using both MIMO and QAM, multiple QAM symbols will be sent at any one time. For example, a 2x2 MIMO arrangement transmitting 16-QAM will transmit 2 symbols at any one time giving $16^2 = 256$ possible combinations. The possible combinations may be referred to as a search space. More generally, the number of combinations in a search space is $M^N$ where M is the QAM value and N the number of MIMO transmit antennae.

Two schemes are known for decoding a MIMO QAM signal: hard decision decoding and soft decision decoding.

2

In hard decision decoding, the decoder determines the closest constellation point to the received vector and this is deemed to be the symbol that was transmitted. The corresponding bit sequence is thereby determined. In soft decision decoding, the probability of each individual bit represented by a received vector is determined and provided as an output. The probabilities may then be used in subsequent processing, such as in a Viterbi decoder.

We have appreciated the need for improved decoding schemes to reduce the computational overhead involved in decoding MIMO signals transmitted using schemes such as QAM.

SUMMARY OF THE INVENTION

The present invention provides an MIMO decoding method and receiver for use in the method. The invention relates to various improvements in the system of our earlier applications.

The improvements of the present invention are defined in the independent claims below, to which reference may now be made. Advantageous features are set forth in the dependent claims. In particular it should be noted that the various improvements can be employed separately or together in different combinations.

In broad terms, the invention provides a decoder in which a hard decision decoding approach is used in combination with a soft decision decoding, and using a technique to limit the number of calculations performed.

In an embodiment, the hard decision decoding produces, for each received vector, the most likely symbol within a search-space. Alternative candidate symbols, referred to as counter hypothesis symbols, are then determined near to the most likely symbol in the search space. For the most likely symbol a distance is determined. For each counter hypothesis symbol, a distance is determined.. The lowest such distance for each bit position in that symbol when the bit is one and when it is zero is then used in a calculation of a likelihood value for that bit.

The output of the embodiment is a string of likelihood values, such as log-likelihood ratios, as produced by a soft decision decoder, but with the advantage of more efficient processing because log-likelihood ratios are not produced for all possible symbols. An embodiment provides a novel MIMO decoding method which simplifies hardware implementation while maintaining a very near optimum performance. One example embodiment relates to DVB broadcasting, but the invention is also applicable to other MIMO transmission systems.

BRIEF DESCRIPTION OF THE DRAWINGS

The invention will be described in more detail by way of example with reference to the accompanying drawings, in which:

**Fig. 1** is a schematic diagram of a MIMO system with two transmitters and two receivers;
**Fig. 2** is a tree diagram showing a QAM MIMO search space;
**Fig. 3** shows a 16-QAM constellation;
**Fig. 4** shows a 2x2 16-QAM search space;
**Fig. 5** shows layer 2 bit mapping;
**Fig. 6** shows layer 1 bit mapping;
**Fig. 7** shows a sub space for layer 1 for which bit0 = 0;
**Fig. 8** shows a sub space for layer 1 for which bit1 = 0;
**Fig. 9** shows a sub space for layer 1 for which bit2 = 0;
**Fig.10** shows a sub space for layer 1 for which bit3 = 0;
**Fig.11** shows a sub space for layer 2 for which bit0 = 0;
**Fig.12** shows a sub space for layer 2 for which bit1 = 0;
**Fig.13** shows a sub space for layer 2 for which bit2 = 0;
**Fig.14** shows a sub space for layer 2 for which bit3 = 0;
**Fig.15** shows an example of slicing an estimated point to a selected point in a QAM constellation;
**Fig. 16** shows the location of nearest points for a given selected point; and
**Fig. 17** shows a flow diagram representing an algorithm embodying the invention.

DETAILED DESCRIPTION OF A PREFERRED EMBODIMENT OF THE INVENTION

### *Overview*

Multiple antenna system, Multiple-Input Multiple-Output (MIMO), is an emerging wireless technology. The system uses multiple transmit and multiple receive antennas to increase the data throughput.

The MIMO system shown in Figure 1 uses two transmit and two receive antennas, normally referred to as a 2x2 MIMO system. The system can be represented by a general equation

$$\mathbf{x} = \mathbf{H}\mathbf{s} + \mathbf{n} \qquad , \hspace{4cm} (1)$$

where $\mathbf{x}$ is the received vector of size $m_r$, $\mathbf{H}$ is the $m_r \times m_t$ complex channel matrix, $\mathbf{s}$ is the vector of $m_t$ transmitted symbols chosen from a complex constellation $D$, and $\mathbf{n}$ is the additive white Gaussian noise (AWGN) vector of size $m_r$ added to the system.

This document will concentrate on a 2x2 MIMO system because it offers the largest gain in the new proposed decoding technique compared to the conventional method.

The received vector $\mathbf{x}$ ($x_1$ and $x_2$) can be written in matrix form

$$\begin{bmatrix} x_1 \\ x_2 \end{bmatrix} = \begin{bmatrix} h_{11} & h_{12} \\ h_{21} & h_{22} \end{bmatrix} \begin{bmatrix} s_1 \\ s_2 \end{bmatrix} + \begin{bmatrix} n_1 \\ n_2 \end{bmatrix} \qquad , \hspace{2cm} (2)$$

where $s_1$ and $s_2$ are the transmitted symbols from transmitter 1 and transmitter 2 respectively, while $n_1$ and $n_2$ are the noise added to receiver 1 and receiver 2 respectively. In general, both $s_1$ and $s_2$ can be modulated on different QAM constellation, e.g. 16-QAM & 64-QAM, but for simplicity this document assumes that both symbols transmit using the same QAM constellation. In this scheme a pair of symbols are transmitted for each time period. The time period is a constant for a given transmission system.

### MIMO Decoding

In a 2x2 MIMO system, the transmitter is able to transmit 2 independent and separate symbols ($s_1$ and $s_2$) from its transmitters hence doubling the amount of data being sent, and this is commonly known as spatial multiplexing (SM) transmission. If the system uses 16-QAM modulation scheme, two 16-QAM symbols will be sent in any one time hence the total number of unique combinations in any one instance is therefore 256. This is equivalent to $M^N$ where M is the modulation size, M-QAM, and $N$ is the number of transmit antennas. All the possible combinations form a set and this is often referred to as the search-space.

This can be illustrated using a 3D tree diagram shown in Figure 2.

Layer 2 (purple points) represents 16 unique points, $s_2$, in the 16-QAM constellation and each of these unique point will have a further 16 points in Layer 1, $s_1$, (green points). In total there are 256 unique symbols, $[s_1, s_2]$ in the search-space.

### Modulation

Conventional uniform rectangular modulation such as in DVB-T and DVB-T2 uses Gray coded bit mapping to represent every symbol in the constellation. The example of a 16-QAM (M-QAM, M=16) constellation is shown in **Error! Reference source not found.**Figure 3.

The number of bits required to represent each constellation point depends on the constellation size as shown in Table 1.

**Table 1:** Bit ordering and required bits for different constellation size

| Constellation | Number of bits, B required | Bit ordering |
|---|---|---|
| QPSK | 2 | {bit0 bit1} |
| 16-QAM | 4 | {bit0 bit1 bit2 bit3} |
| 64-QAM | 6 | {bit0 bit1 bit2 bit3 bit4 bit5} |
| 256-QAM | 8 | {bit0 bit1 bit2 bit3 bit4 bit5 bit6 bit7} |
| 1024-QAM | 10 | {bit0 bit1 bit2 bit3 bit4 bit5 bit6 bit7 bit8 bit9} |
| 4096-QAM | 12 | {bit0 bit1 bit2 bit3 bit4 bit5 bit6 bit7 bit8 bit9 bit10 bit11} |

In the case of a 2x2 MIMO system, the total number of bits sent will be doubled, e.g. 8 bits for 16-QAM and 12 bits for 64-QAM. For 16-QAM, the bit ordering will be:

$$\underbrace{\qquad\qquad}_{s_1} \qquad \underbrace{\qquad\qquad}_{s_2}$$

16-QAM $\qquad$ { bit0$_{s1}$ $\quad$ bit1$_{s1}$ $\quad$ bit2$_{s1}$ $\quad$ bit3$_{s1}$ $\quad$ bit0$_{s2}$ $\quad$ bit1$_{s2}$ $\quad$ bit2$_{s2}$ $\quad$ bit3$_{s2}$ }

### *Search-space and Sub-spaces*

The search-space is a set of all possible combinations of the transmitted data. For example in a 3x3 MIMO system which is using 64-QAM in all transmitting antennas, the search-space contains 262,144 (or $64^3$) symbols or unique combinations.

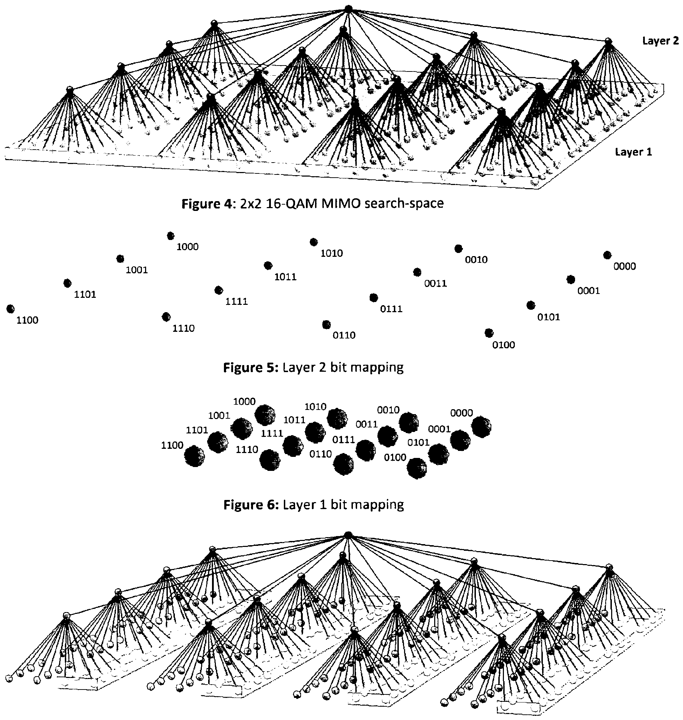

In a 2x2 16-QAM MIMO system, the search-space is all the symbols in Layer 1 (contained inside the yellow box) in Figure 4.

Taking Layer 2 from Figure 2 and applying the Gray coded bit mapping gives the following Figure 5 and defining each constellation 'cluster' in Layer 1 with the following bit mapping in Figure 6.

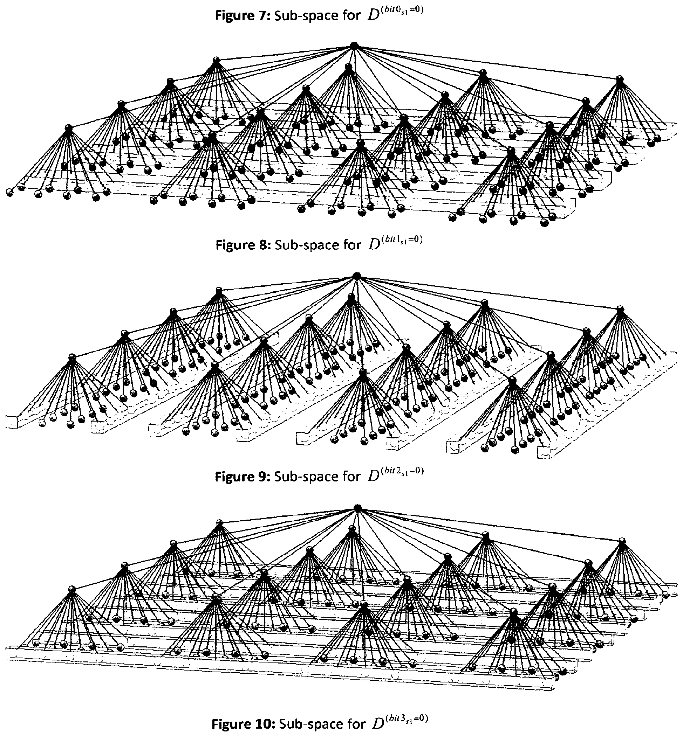

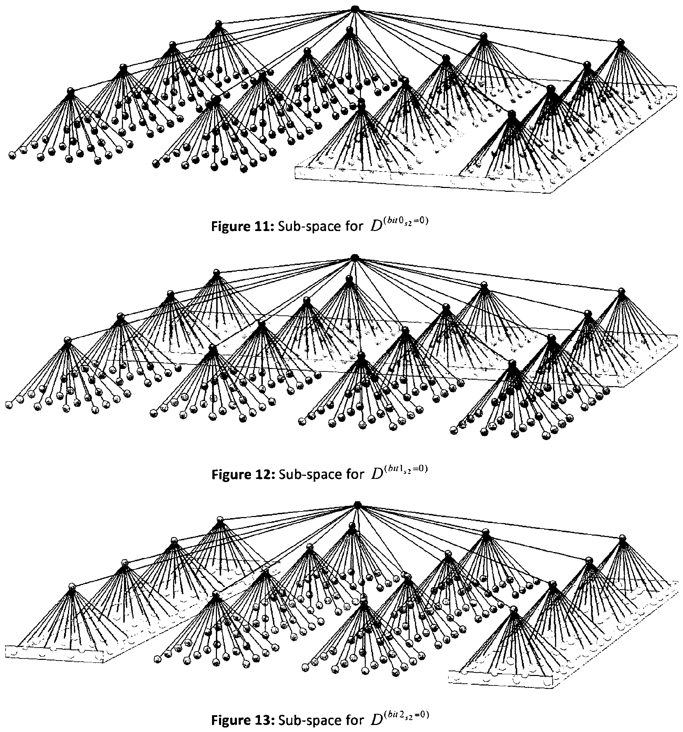

The sub-space $D^{(bitn_{sk}=0)}$ for each bit are the points enclosed in the yellow box in Figure 7 to Figure 14 and the subscript $sk$ refers to the transmitted point, $s$, at Layer k.

### *Hard-decision Decoding*

Hard-decision decoding is a decoding method of finding the most likely symbol within the search-space given a particular received point. This uses the Maximum-Likelihood (ML) equation given by

$$\hat{\mathbf{s}} = \arg\min_{\mathbf{s}\in D}\|\mathbf{x} - \mathbf{Hs}\|^2, \tag{3}$$

where $\hat{\mathbf{s}}$ is the ML solution and the rest of the notation is as explained earlier. Basically, the ML solution is the symbol within the search-space which gives the shortest Euclidean distance (or squared norm).

MIMO decoding exploits the use of QR matrix decomposition where Q is an orthonormal matrix and R is an upper triangular matrix with real (not complex) diagonal values. All the derivations below are intended for a 2x2 MIMO system.

The first step in the decoding is to decompose the channel matrix H into Q and R:

$$\begin{bmatrix} h_{11} & h_{12} \\ h_{21} & h_{22} \end{bmatrix} = \begin{bmatrix} q_{11} & q_{12} \\ q_{21} & q_{22} \end{bmatrix}\begin{bmatrix} r_{11} & r_{12} \\ 0 & r_{22} \end{bmatrix} \tag{4}$$

Expanding the squared norm in equation (3) will lead to

$$\|\mathbf{x} - \mathbf{Hs}\|^2 = \left\| \begin{bmatrix} x_1 \\ x_2 \end{bmatrix} - \begin{bmatrix} h_{11} & h_{12} \\ h_{21} & h_{22} \end{bmatrix}\begin{bmatrix} s_1 \\ s_2 \end{bmatrix} \right\|^2 \tag{5}$$

Substituting (4) into (5) gives

$$\|\mathbf{x} - \mathbf{Hs}\|^2 = \left\| \begin{bmatrix} x_1 \\ x_2 \end{bmatrix} - \begin{bmatrix} q_{11} & q_{12} \\ q_{21} & q_{22} \end{bmatrix}\begin{bmatrix} r_{11} & r_{12} \\ 0 & r_{22} \end{bmatrix}\begin{bmatrix} s_1 \\ s_2 \end{bmatrix} \right\|^2 \tag{6}$$

This can be re-written as

$$\|\mathbf{x} - \mathbf{Hs}\|^2 = \left\| \begin{bmatrix} y_1 \\ y_2 \end{bmatrix} - \begin{bmatrix} r_{11} & r_{12} \\ 0 & r_{22} \end{bmatrix} \begin{bmatrix} s_1 \\ s_2 \end{bmatrix} \right\|^2 , \qquad (9)$$

where $\begin{bmatrix} y_1 \\ y_2 \end{bmatrix} = \begin{bmatrix} q_{11}* & q_{21}* \\ q_{12}* & q_{22}* \end{bmatrix} \begin{bmatrix} x_1 \\ x_2 \end{bmatrix}$ and this matrix pre-multiplication has no effect on the result of the squared norm because it is an orthonormal matrix.

Hence the ML solution is given by

$$\hat{\mathbf{s}} = \arg \min_{s \in D} \left\| \begin{bmatrix} y_1 \\ y_2 \end{bmatrix} - \begin{bmatrix} r_{11} & r_{12} \\ 0 & r_{22} \end{bmatrix} \begin{bmatrix} s_1 \\ s_2 \end{bmatrix} \right\|^2 \qquad (10)$$

Expanding (10)

$$\hat{\mathbf{s}} = \arg \min_{s \in D} \left\| \begin{bmatrix} y_1 - (r_{11}s_1 + r_{12}s_2) \\ y_2 - r_{22}s_2 \end{bmatrix} \right\|^2 \qquad (11)$$

and each row in the squared norm can be written as squared Partial Distance ($PD_n{}^2$) giving

$$\hat{\mathbf{s}} = \arg \min_{s \in D} \left( PD_1{}^2 + PD_2{}^2 \right) , \qquad (12)$$

where

$$PD_1{}^2 = \left\| y_1 - (r_{11}s_1 + r_{12}s_2) \right\|^2 \qquad (12.1)$$

and

$$PD_2{}^2 = \left\| y_1 - r_{22}s_2 \right\|^2 \qquad (12.2)$$

$$\text{EDist}^2 = PD_1{}^2 + PD_2{}^2 \qquad (12.3)$$

This means that the hard-decision MIMO decoding can be done in stages; first calculate $PD_2{}^2$ by setting $s_2$ before calculating $PD_1{}^2$ by setting $s_1$. This is iterated over all possible combination and the ML solution is the pair of $s_1$ and $s_2$ which gives the shortest Euclidean distance.

### Soft-decision Decoding

Soft-decision decoding looks at the received symbol and works out the statistical probability of each individual bit that it represents and forms a log-likelihood ratio (LLR). The LLR of every bit in the transmitted symbols can be computed by calculating the distances between the received point and the group of constellation points (after the channel) where the corresponding bit is '0' and '1'.

$$LLR(bitn_{sk} \mid \mathbf{x}) = \log\left(\frac{\sum_{\mathbf{a}_1 \in D^{(bitn_{sk}=1)}} \exp\left(-\frac{\| \mathbf{x} - \mathbf{Ha}_1 \|^2}{2\sigma^2}\right)}{\sum_{\mathbf{a}_0 \in D^{(bitn_{sk}=0)}} \exp\left(-\frac{\| \mathbf{x} - \mathbf{Ha}_0 \|^2}{2\sigma^2}\right)}\right) \quad , \tag{13}$$

where $\mathbf{x}$ is the received vector, $\sigma^2$ is the noise variance, H is the channel matrix, $D$ is search-space, $D^{(bitn_{sk}=0)}$ is the sub-space of $D$ where the corresponding bit $n$ of $sk$ is '0', and $D^{(bitn_{sk}=1)}$ is the sub-space of $D$ where the corresponding bit $n$ of $sk$ is '1'.

Equation (13) can be further simplified using the max-log approximation, hence reducing the equation to

$$LLR(bitn_{sk} \mid \mathbf{x}) = \log\left(\frac{\exp\left(-\frac{\| \mathbf{x} - \mathbf{Ha}_{1\min} \|^2}{2\sigma^2}\right)}{\exp\left(-\frac{\| \mathbf{x} - \mathbf{Ha}_{0\min} \|^2}{2\sigma^2}\right)}\right) \tag{14}$$

where $a_{1\min}$ is the closest point to $\mathbf{x}$ in the $D^{(bitn_{sk}=1)}$ sub-space and $a_{0\min}$ is the closest point to x in the $D^{(bitn_{sk}=0)}$ sub-space.

$$LLR(bitn_{sk} \mid \mathbf{x}) = \log\left(\exp\left(-\frac{\| \mathbf{x} - \mathbf{Ha}_{1\min} \|^2}{2\sigma^2}\right)\right) - \log\left(\exp\left(-\frac{\| \mathbf{x} - \mathbf{Ha}_{0\min} \|^2}{2\sigma^2}\right)\right)$$

(14.1)

$$LLR(bitn_{sk} \mid \mathbf{x}) = \left(-\frac{\| \mathbf{x} - \mathbf{Ha}_{1\min} \|^2}{2\sigma^2}\right) - \left(-\frac{\| \mathbf{x} - \mathbf{Ha}_{0\min} \|^2}{2\sigma^2}\right)$$

(14.2)

$$LLR(bitn_{sk} \mid \mathbf{x}) = \frac{1}{2\sigma^2}\left(\| \mathbf{x} - \mathbf{Ha}_{0\min} \|^2 - \| \mathbf{x} - \mathbf{Ha}_{1\min} \|^2\right)$$

(15)

The squared norms found in equation (15), $\|\mathbf{x} - \mathbf{Ha}_{0\min}\|^2$ and $\|\mathbf{x} - \mathbf{Ha}_{1\min}\|^2$, are simply the squared Euclidean distance between the received vector and the nearest point in the sub-space $D^{(bitn_{sk}=0)}$ or $D^{(bitn_{sk}=1)}$ respectively (after the channel).

The ML solution is the nearest symbol to the equalised received symbol in the search-space and the corresponding squared Euclidean distance fills half of the required squared norm for the LLR calculations. The soft-decision decoder will then need to find the other half of the squared norm and these are calculated from the nearest ML counter-hypothesis (CH) points.

**Example**

Given parameters:

Table 2 : Example system parameters

| MIMO System | 2x2 | |
|---|---|---|
| Transmit Symbol | $s_1$ | $s_2$ |
| Modulation | 16-QAM | 16-QAM |

(continued)

| MIMO System | 2x2 | |
|---|---|---|
| Transmit Symbol | $s_1$ | $s_2$ |
| ML solution | 3 + i | -1 + 3i |
| Bit representation | 0001 | 1010 |
| $EDist_{ML}{}^2$ | α | |

The LLR metric table is therefore:

| Symbol | $s_1$ | | | | $s_2$ | | | |
|---|---|---|---|---|---|---|---|---|
| | $bit0_{s1}$ | $bit1_{s1}$ | $bit2_{s1}$ | $bit3_{s1}$ | $bit0_{s2}$ | $bit1_{s2}$ | $bit2_{s2}$ | $bit3_{s2}$ |
| $\|\mathbf{x} - \mathbf{Ha}_{0\,min}\|^2$ | α | α | α | $EDist_{CH3s1}{}^2$ | $EDist_{CH0s2}{}^2$ | α | $EDist_{CH2s2}{}^2$ | α |
| $\|\mathbf{x} - \mathbf{Ha}_{1\,min}\|^2$ | $EDist_{CH0s1}{}^2$ | $EDist_{CH1s1}{}^2$ | $EDist_{CH2s1}{}^2$ | α | α | $EDist_{CH1s2}{}^2$ | α | $EDist_{CH3s2}{}^2$ |

**Table 3 : LLR Metric Table**

As it can be seen in Table 3 that the soft-decision decoder will need to find all the remaining Euclidean distances; $EDist_{CH0s1}{}^2$, $EDist_{CH1s1}{}^2$, $EDist_{CH2s1}{}^2$, $EDist_{CH3s1}{}^2$, $EDist_{CH0s2}{}^2$, $EDist_{CH1s2}{}^2$, $EDist_{CH2s2}{}^2$, and $EDist_{CH3s2}{}^2$. Once the LLR metric table is filled, the LLR for every bit can be calculated.

*Implementation*

The decoder first select an $s_2$ symbol (in no particular order) to calculate $PD_2{}^2$ using equation (12.2), and in the conventional method it will then iterate over the whole set of $s_1$ symbols to calculate $PD_1{}^2$. Summing both $PD_2{}^2$ and $PD_1{}^2$ on every iteration gives a new squared norm that is needed to fill in the LLR metric table. On every iteration, the affected cells in the LLR metric table will be updated with the new squared norm if the value is smaller than the existing one in the cell.
This is repeated M-1 times to cycle through the whole set of $s_2$ symbols one at a time. The total number of *PD* that will be calculated is therefore M + M$^2$.

*Improvement*

In the embodiment of the invention, the new proposed technique also starts by first choosing an $s_2$ symbol but it then avoids iterating over the entire set of $s_1$ symbols like in the conventional system. Instead it iterates over a carefully selected subset of $s_1$ symbols hence reducing the amount of calculations required for the decoding. This new technique does not cause any penalty to the decoding performance. The total number of *PD* that will be calculated is therefore M + M x [log2(M) + 1].
The embodiment provides a hardware optimisation technique which reduces the number of calculations that it requires to maintain the near optimum decoding performance as in the conventional method. The embodiment works for any uniform rectangular modulation scheme e.g. QPSK, 16-QAM, 64-QAM, 256-QAM, etc.
The new technique is divided into two steps:

1) Find the nearest $s_1$ symbol by slicing the estimated $\hat{s}_1$, to its constellation, by selecting the closest constellation point.

2) Once the nearest $s_1$ is found, all the nearest CH points for $s_1$ can be deduced and their partial distance calculated. The relevant cells in an LLR metric table will then be updated. On every s2 iteration, the decoder will compare the existing values in the metric table with these new values. All the affected cells in the metric table will be updated with the new values if it is smaller than the existing ones. After all the s2 iterations, the LLR metric table should be complete and the LLR for every bit can be.

This new technique can also be used on higher system dimensions such as 3x3, 4x4 or even 8x8 MIMO systems; however the advantage of this decoding method diminishes as the dimensionality increases.

*Finding the Nearest s1 Symbol*

Equation (12.1) can be written in a simpler form with the predetermined $s_2$ symbol.

$$PD_1^2 = \left\| y_{pre1} - r_{11}s_1 \right\|^2 \,, \qquad \text{where} \quad y_{pre1} = y_1 - r_{12}s_2 \qquad (16)$$

The diagonal entries of the upper triangular R matrix in the QR decomposition are real values; hence the $r_{11}$ pre-multiplier can be regarded as a scaling factor. The estimated $s_1$ symbol, $\hat{s}_1$, is therefore given by

$$\hat{s}_1 = \frac{y_{pre1}}{r_{11}} \qquad (17)$$

Since the constellation points are on 'odd-number' lattice (e.g. {-3, -1, 1, 3} for 16-QAM), the nearest $s_1$ symbol can be found by slicing $\hat{s}_1$ to the constellation lattice using the equations below:

$$\mathrm{Re}\{s_1\} = \begin{cases} -L & , & \mathrm{Re}\{\hat{s}_1\} \le -L \\ 2 \times \left\lceil \dfrac{\mathrm{Re}\{\hat{s}_1\}}{2} \right\rceil - 1 & , & -L < \mathrm{Re}\{\hat{s}_1\} < L \\ L & , & \mathrm{Re}\{\hat{s}_1\} \ge L \end{cases}$$

(18.1)

$$\mathrm{Im}\{s_1\} = \begin{cases} -L & , & \mathrm{Im}\{\hat{s}_1\} \le -L \\ 2 \times \left\lceil \dfrac{\mathrm{Im}\{\hat{s}_1\}}{2} \right\rceil - 1 & , & -L < \mathrm{Im}\{\hat{s}_1\} < L \\ L & , & \mathrm{Im}\{\hat{s}_1\} \ge L \end{cases} \qquad (18.2)$$

, where L is largest integer in the lattice (as shown in Table 4):

**Table 4:** Largest integer in the lattice for each constellation

| Constellation | *L* |
|---|---|
| QPSK | 1 |
| 16-QAM | 3 |
| 64-QAM | 7 |
| 256-QAM | 15 |
| 1024-QAM | 31 |
| 4096-QAM | 63 |

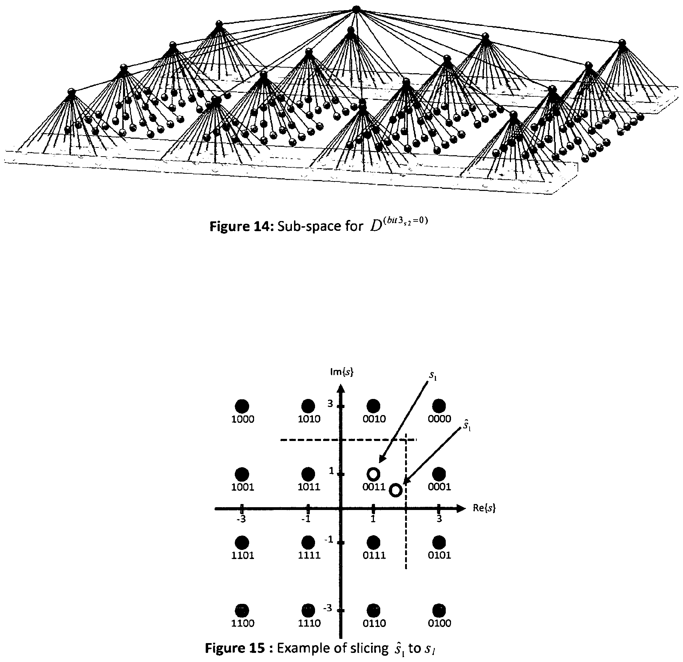

An example of the slicing of $\hat{s}_1$ is shown in Figure 15.

*Finding Counter-hypothesis (CH) Points*

The next step involves finding all the nearest CH points for $s_1$. For soft-decision decoding, the decoder needs to find a CH point for every transmitted bit and this new technique efficiently finds half of the needed CH points on every $s_2$ iteration. Before specifying all the nearest CH points for $s_1$, the necessary real and imaginary values (stated as *xCHn* and *yCHn*) need to be calculated first, and the algorithm to find these values are shown in Appendix A (up until 4096-QAM).

The nearest CH point for each transmitted bit of $s_1$ is made up of the values calculated previously and these points are summarised in Table 5.

**Table 5** : Counter-hypothesis point for each bit

| Nearest CH | Re{CHbit$n_{s1}$} | Im{CHbit$n_{s1}$} |
|---|---|---|
| CHbit0$_{s1}$ | xCH0 | Im{$s_1$} |
| CHbit1$_{s1}$ | Re{$s_1$} | yCH1 |
| CHbit2$_{s1}$ | xCH2 | Im{$s_1$} |
| CHbit3$_{s1}$ | Re{$s_1$} | yCH3 |
| CHbit4$_{s1}$ | xCH4 | Im{$s_1$} |
| CHbit5$_{s1}$ | Re{$s_1$} | yCH5 |
| CHbit6$_{s1}$ | xCH6 | Im{$s_1$} |
| CHbit7$_{s1}$ | Re{$s_1$} | yCH7 |
| CHbit8$_{s1}$ | xCH8 | Im{$s_1$} |
| CHbit9$_{s1}$ | Re{$s_1$} | yCH9 |
| CHbit10$_{s1}$ | xCH10 | Im{$s_1$} |
| CHbit11$_{s1}$ | Re{$s_1$} | yCH11 |

The CH points used for each constellation mapping is shown in the table below:

**Table 6** : Layer 1 CH points used in each Constellation mapping

| Constellation | Nearest Counter-hypothesis Points for $s_1$ |
|---|---|
| QPSK | {CHbit0$_{s1}$ CHbit1$_{s1}$} |
| 16-QAM | {CHbit0$_{s1}$ CHbit1$_{s1}$ CHbit2$_{s1}$ CHbit3$_{s1}$} |
| 64-QAM | {CHbit0$_{s1}$ CHbit1$_{s1}$ CHbit2$_{s1}$ CHbit3$_{s1}$ CHbit4$_{s1}$ CHbit5$_{s1}$} |
| 256-QAM | {CHbit0$_{s1}$ CHbit1$_{s1}$ CHbit2$_{s1}$ CHbit3$_{s1}$ CHbit4$_{s1}$ CHbit5$_{s1}$ CHbit6$_{s1}$ CHbit7$_{s1}$} |
| 1024-QAM | {CHbit0$_{s1}$ CHbit1$_{s1}$ CHbit2$_{s1}$ CHbit3$_{s1}$ CHbit4$_{s1}$ CHbit5$_{s1}$ CHbit6$_{s1}$ CHbit7$_{s1}$ CHbit8$_{s1}$ CHbit9$_{s1}$} |
| 4096-QAM | {CHbit0$_{s1}$ CHbit1$_{s1}$ CHbit2$_{s1}$ CHbit3$_{s1}$ CHbit4$_{s1}$ CHbit5$_{s1}$ CHbit6$_{s1}$ CHbit7$_{s1}$ CHbit8$_{s1}$ CHbit9$_{s1}$ CHbit10$_{s1}$ CHbit11$_{s1}$} |

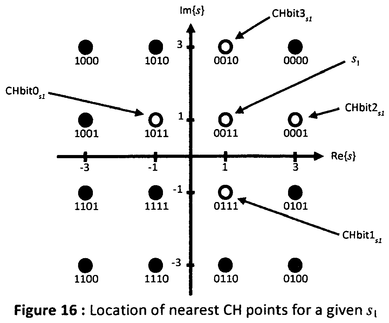

An example of the nearest CH points for a given $s_1$ in a 16-QAM constellation is shown in Figure 16.

*Updating LLR Metric Table*

Once the CH points are identified, $PD_1^2$ for every CH can be calculated using the equation derived from equation (16). The $s_1$ will be replaced by CHbit$n_{s1}$ as shown in equation (19).

$$PD_{1\ \text{CHbit}n}{}^2 = \left\| y_{pre1} - r_{11}\text{CHbit}n_{s1} \right\|^2 \qquad (19)$$

Next the corresponding Euclidean distances can be calculated; $\text{EDist}_{ML}{}^2$, $\text{EDist}_{CH0s1}{}^2$, ... , $\text{EDist}_{CHBs1}{}^2$.

$$\text{EDist}_{ML}{}^2 = PD_1{}^2 + PD_2{}^2$$

$$\text{EDist}_{CHns1}{}^2 = PD_{1\ \text{CHbit}\ n}{}^2 + PD_2{}^2$$

On every $s_2$ iteration, the decoder will compare the existing values in the metric table with these new values. All the affected cells in the metric table will be updated with the new values if it is smaller than the existing ones.

After all the $s_2$ iterations, the LLR metric table should be complete and the LLR for every bit can be calculated using equation (15).

***Overall Algorithm Flow Diagram***

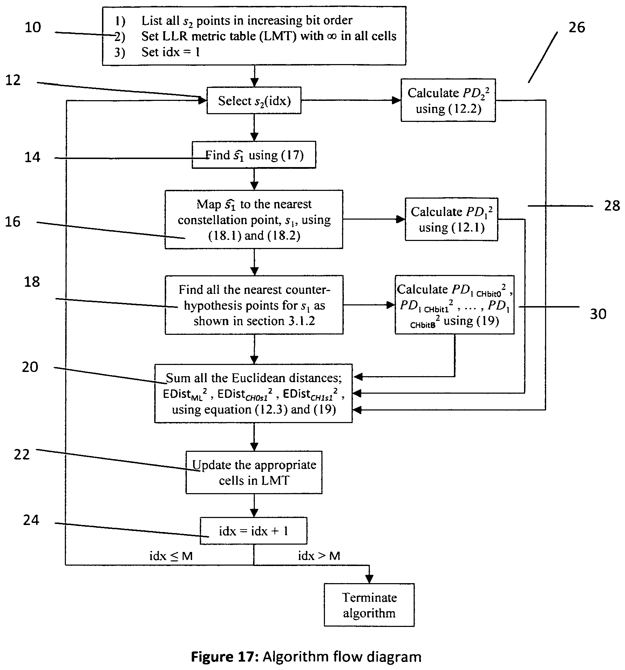

The overall flow diagram of the decoding algorithm according to the embodiment is summarised in Figure 17. For ease of understanding, the algorithm is described as an iterative process, but could be implemented in other ways including using parallel processing.

At an initialisation step 10, the points in one select QAM constellation (here $S_2$) are chosen, ordered, and a LLR metric table initialised. An index (idx) is set to a first value to select the first point in the constellation. At a selection step 12, the first point is selected and the partial distance calculated at a calculation step 26. The estimated symbol is determined at a determining step 14 and counter hypothesis points in another constellation are then determined at step 18 for the estimated most likely symbol. For the most likely symbol a distance is calculated at calculation step 28.

For each of the counter hypothesis points, the partial distances are calculated at step 30. The Euclidean distances are determined at step 20 and used to update the metric table at step 22. The index is iterated at step 24 until the calculations have been performed for all points at which stage the algorithm terminates.

The algorithm may be implemented as software or hardware. In particular, the method may be embodied in a decoder having an input, means to undertake the various calculations and an output for providing a data comprising log-likelihood ratios for use by a subsequent process such as a Viterbi decoder, either within the decoder or in a separate unit.

This new proposed technique can save a lot of unnecessary calculations because the algorithm picks only the symbols that might have a smaller overall Euclidean distance. This is done by looking at the boundaries created by the Gray coded bit mapping of QAM constellation. Through a series of geometric deduction, the algorithm finds only the symbols that can potentially lead to a shorter Euclidean distance in the LLR metric table.

This effectively reduces the complexity of the MIMO decoder and makes hardware implementation easier. This new technique has huge advantage in a 2x2 MIMO system with high QAM constellation and the advantage diminishes in small QAM constellation and/or larger MIMO systems.

***Appendix A***

   **1) CHbit0$_{s1}$/CHbit1$_{s1}$**

     i)

$$\textbf{CHbit0}_{s1}\ : \qquad xCH0 = -\,\text{sgn}(\text{Re}\{s_1\}) \times 1$$

$$\text{Re}\{\textbf{CHbit0}_{s1}\} = xCH0$$

     ii)

$$\textbf{CHbit1}_{s1}\ : \qquad yCH1 = -\,\text{sgn}(\text{Im}\{s_1\}) \times 1$$

$$\text{Im}\{\textbf{CHbit1}_{s1}\} = yCH1$$

2) **CHbit2**$_{s1}$**/CHbit3**$_{s1}$ Let $G = \dfrac{L+1}{2}$

   i) **CHbit2**$_{s1}$

$$\text{For } \left|\text{Re}\{s_1\}\right| \leq G \qquad : \qquad xCH2 = \text{sgn}(\text{Re}\{s_1\}) \times (G+1)$$

$$\text{For } \left|\text{Re}\{s_1\}\right| > G \qquad : \qquad xCH2 = \text{sgn}(\text{Re}\{s_1\}) \times (G-1)$$

$$\text{Re}\{\textbf{CHbit2}_{s1}\} = xCH2$$

   ii) **CHbit3**$_{s1}$

$$\text{For } \left|\text{Im}\{s_1\}\right| \leq G \qquad : \qquad yCH3 = \text{sgn}(\text{Im}\{s_1\}) \times (G+1)$$

$$\text{For } \left|\text{Im}\{s_1\}\right| > G \qquad : \qquad yCH3 = \text{sgn}(\text{Im}\{s_1\}) \times (G-1)$$

$$\text{Im}\{\textbf{CHbit3}_{s1}\} = yCH3$$

3) **CHbit4**$_{s1}$**/CHbit5**$_{s1}$ Let $G = \dfrac{L+1}{4}$

   i) **CHbit4**$_{s1}$

$$\text{For } \left|\text{Re}\{s_1\}\right| \leq G \qquad : \qquad xCH4 = \text{sgn}(\text{Re}\{s_1\}) \times (G+1)$$

$$\text{For } G < \left|\text{Re}\{s_1\}\right| \leq 3G \quad : \qquad xCH4 = \text{sgn}(\text{Re}\{s_1\}) \times \begin{cases} (G-1) \; , & \left|\text{Re}\{s_1\}\right| \leq 2G \\[1em] (3G+1) \; , & \left|\text{Re}\{s_1\}\right| > 2G \end{cases}$$

$$\text{For } \left|\text{Re}\{s_1\}\right| > 3G \qquad : \qquad xCH4 = \text{sgn}(\text{Re}\{s_1\}) \times (3G-1)$$

$$\text{Re}\{\textbf{CHbit4}_{s1}\} = xCH4$$

   ii) **CHbit5**$_{s1}$

$$\text{For } \left|\text{Im}\{s_1\}\right| \leq G \qquad : \qquad yCH5 = \text{sgn}(\text{Im}\{s_1\}) \times (G+1)$$

$$\text{For } G < \left|\text{Im}\{s_1\}\right| \leq 3G \quad : \qquad yCH5 = \text{sgn}(\text{Im}\{s_1\}) \times \begin{cases} (G-1) \; , & \left|\text{Im}\{s_1\}\right| \leq 2G \\[1em] (3G+1) \; , & \left|\text{Im}\{s_1\}\right| > 2G \end{cases}$$

For $|\text{Im}\{s_1\}| > 3G$ : $yCH5 = \text{sgn}(\text{Im}\{s_1\}) \times (3G - 1)$

$$\text{Im}\{\textbf{CHbit5}_{s1}\} = yCH5$$

4) **CHbit6$_{s1}$/CHbit7$_{s1}$** Let $G = \dfrac{L+1}{8}$

i) **CHbit6$_{s1}$**

For $|\text{Re}\{s_1\}| \leq G$ : $xCH6 = \text{sgn}(\text{Re}\{s_1\}) \times (G + 1)$

For $G < |\text{Re}\{s_1\}| \leq 3G$ : $xCH6 = \text{sgn}(\text{Re}\{s_1\}) \times \begin{cases} (G-1) & , \; |\text{Re}\{s_1\}| \leq 2G \\ (3G+1) & , \; |\text{Re}\{s_1\}| > 2G \end{cases}$

For $3G < |\text{Re}\{s_1\}| \leq 5G$ : $xCH6 = \text{sgn}(\text{Re}\{s_1\}) \times \begin{cases} (3G-1) & , \; |\text{Re}\{s_1\}| \leq 4G \\ (5G+1) & , \; |\text{Re}\{s_1\}| > 4G \end{cases}$

For $5G < |\text{Re}\{s_1\}| \leq 7G$ : $xCH6 = \text{sgn}(\text{Re}\{s_1\}) \times \begin{cases} (5G-1) & , \; |\text{Re}\{s_1\}| \leq 6G \\ (7G+1) & , \; |\text{Re}\{s_1\}| > 6G \end{cases}$

For $|\text{Re}\{s_1\}| > 7G$ : $xCH6 = \text{sgn}(\text{Re}\{s_1\}) \times (7G - 1)$

$$\text{Re}\{\textbf{CHbit6}_{s1}\} = xCH6$$

ii) **CHbit7$_{s1}$**

For $|\text{Im}\{s_1\}| \leq G$ : $yCH7 = \text{sgn}(\text{Im}\{s_1\}) \times (G + 1)$

For $G < |\text{Im}\{s_1\}| \leq 3G$ : $yCH7 = \text{sgn}(\text{Im}\{s_1\}) \times \begin{cases} (G-1) & , \; |\text{Im}\{s_1\}| \leq 2G \\ (3G+1) & , \; |\text{Im}\{s_1\}| > 2G \end{cases}$

For $3G < |\text{Im}\{s_1\}| \leq 5G$ : $yCH7 = \text{sgn}(\text{Im}\{s_1\}) \times \begin{cases} (3G-1) & , \; |\text{Im}\{s_1\}| \leq 4G \\ (5G+1) & , \; |\text{Im}\{s_1\}| > 4G \end{cases}$

For $5G < |\text{Im}\{s_1\}| \leq 7G$ : $yCH7 = \text{sgn}(\text{Im}\{s_1\}) \times \begin{cases} (5G-1) & , \; |\text{Im}\{s_1\}| \leq 6G \\ (7G+1) & , \; |\text{Im}\{s_1\}| > 6G \end{cases}$

$$\text{For } |\text{Im}\{s_1\}| > 7G \quad : \quad yCH7 = \text{sgn}(\text{Im}\{s_1\}) \times (7G - 1)$$
$$\text{Im}\{\textbf{CHbit7}_{s1}\} = yCH7$$

**5) CHbit8$_{s1}$/CHbit9$_{s1}$** Let $\quad G = \dfrac{L+1}{16}$

**i) CHbit8$_{s1}$**

$$\text{For } |\text{Re}\{s_1\}| \le G \quad : \quad xCH8 = \text{sgn}(\text{Re}\{s_1\}) \times (G + 1)$$

$$\text{For } G < |\text{Re}\{s_1\}| \le 3G \quad : \quad xCH8 = \text{sgn}(\text{Re}\{s_1\}) \times \begin{cases} (G - 1) \, , & |\text{Re}\{s_1\}| \le 2G \\ (3G + 1) \, , & |\text{Re}\{s_1\}| > 2G \end{cases}$$

$$\text{For } 3G < |\text{Re}\{s_1\}| \le 5G \quad : \quad xCH8 = \text{sgn}(\text{Re}\{s_1\}) \times \begin{cases} (3G - 1) \, , & |\text{Re}\{s_1\}| \le 4G \\ (5G + 1) \, , & |\text{Re}\{s_1\}| > 4G \end{cases}$$

$$\text{For } 5G < |\text{Re}\{s_1\}| \le 7G \quad : \quad xCH8 = \text{sgn}(\text{Re}\{s_1\}) \times \begin{cases} (5G - 1) \, , & |\text{Re}\{s_1\}| \le 6G \\ (7G + 1) \, , & |\text{Re}\{s_1\}| > 6G \end{cases}$$

$$\text{For } 7G < |\text{Re}\{s_1\}| \le 9G \quad : \quad xCH8 = \text{sgn}(\text{Re}\{s_1\}) \times \begin{cases} (7G - 1) \, , & |\text{Re}\{s_1\}| \le 8G \\ (9G + 1) \, , & |\text{Re}\{s_1\}| > 8G \end{cases}$$

$$\text{For } 9G < |\text{Re}\{s_1\}| \le 11G \quad : \quad xCH8 = \text{sgn}(\text{Re}\{s_1\}) \times \begin{cases} (9G - 1) \, , & |\text{Re}\{s_1\}| \le 10G \\ (11G + 1) \, , & |\text{Re}\{s_1\}| > 10G \end{cases}$$

$$\text{For } 11G < |\text{Re}\{s_1\}| \le 13G \quad : \quad xCH8 = \text{sgn}(\text{Re}\{s_1\}) \times \begin{cases} (11G - 1) \, , & |\text{Re}\{s_1\}| \le 12G \\ (13G + 1) \, , & |\text{Re}\{s_1\}| > 12G \end{cases}$$

$$\text{For } 13G < |\text{Re}\{s_1\}| \le 15G \quad : \quad xCH8 = \text{sgn}(\text{Re}\{s_1\}) \times \begin{cases} (13G - 1) \, , & |\text{Re}\{s_1\}| \le 14G \\ (15G + 1) \, , & |\text{Re}\{s_1\}| > 14G \end{cases}$$

For $|\text{Re}\{s_1\}| > 15G$ $xCH8 = \text{sgn}(\text{Re}\{s_1\}) \times (15G - 1)$ $\text{Re}\{\textbf{CHbit8}_{s1}\} = xCH8$
**ii) CHbit9$_{s1}$**

For $|\mathrm{Im}\{s_1\}| \leq G$ : $yCH9 = \mathrm{sgn}(\mathrm{Im}\{s_1\}) \times (G+1)$

For $G < |\mathrm{Im}\{s_1\}| \leq 3G$ : $yCH9 = \mathrm{sgn}(\mathrm{Im}\{s_1\}) \times \begin{cases} (G-1) & , \; |\mathrm{Im}\{s_1\}| \leq 2G \\ (3G+1) & , \; |\mathrm{Im}\{s_1\}| > 2G \end{cases}$

For $3G < |\mathrm{Im}\{s_1\}| \leq 5G$ : $yCH9 = \mathrm{sgn}(\mathrm{Im}\{s_1\}) \times \begin{cases} (3G-1) & , \; |\mathrm{Im}\{s_1\}| \leq 4G \\ (5G+1) & , \; |\mathrm{Im}\{s_1\}| > 4G \end{cases}$

For $5G < |\mathrm{Im}\{s_1\}| \leq 7G$ : $yCH9 = \mathrm{sgn}(\mathrm{Im}\{s_1\}) \times \begin{cases} (5G-1) & , \; |\mathrm{Im}\{s_1\}| \leq 6G \\ (7G+1) & , \; |\mathrm{Im}\{s_1\}| > 6G \end{cases}$

For $7G < |\mathrm{Im}\{s_1\}| \leq 9G$ : $yCH9 = \mathrm{sgn}(\mathrm{Im}\{s_1\}) \times \begin{cases} (7G-1) & , \; |\mathrm{Im}\{s_1\}| \leq 8G \\ (9G+1) & , \; |\mathrm{Im}\{s_1\}| > 8G \end{cases}$

For $9G < |\mathrm{Im}\{s_1\}| \leq 11G$ : $yCH9 = \mathrm{sgn}(\mathrm{Im}\{s_1\}) \times \begin{cases} (9G-1) & , \; |\mathrm{Im}\{s_1\}| \leq 10G \\ (11G+1) & , \; |\mathrm{Im}\{s_1\}| > 10G \end{cases}$

For $11G < |\mathrm{Im}\{s_1\}| \leq 13G$ : $yCH9 = \mathrm{sgn}(\mathrm{Im}\{s_1\}) \times \begin{cases} (11G-1) & , \; |\mathrm{Im}\{s_1\}| \leq 12G \\ (13G+1) & , \; |\mathrm{Im}\{s_1\}| > 12G \end{cases}$

For $13G < |\mathrm{Im}\{s_1\}| \leq 15G$ : $yCH9 = \mathrm{sgn}(\mathrm{Im}\{s_1\}) \times \begin{cases} (13G-1) & , \; |\mathrm{Im}\{s_1\}| \leq 14G \\ (15G+1) & , \; |\mathrm{Im}\{s_1\}| > 14G \end{cases}$

For $|\mathrm{Im}\{s_1\}| > 15G$ : $yCH9 = \mathrm{sgn}(\mathrm{Im}\{s_1\}) \times (15G-1)$

$\mathrm{Im}\{\mathbf{CHbit9}_{s1}\} = yCH9$

6) **CHbit10$_{s1}$/CHbit11$_{s1}$** Let $\quad G = \dfrac{L+1}{32}$

i) **CHbit10$_{s1}$**

For $|\mathrm{Re}\{s_1\}| \leq G$ : $xCH10 = \mathrm{sgn}(\mathrm{Re}\{s_1\}) \times (G+1)$

For $G < |\text{Re}\{s_1\}| \le 3G$ :

$$xCH10 = \text{sgn}(\text{Re}\{s_1\}) \times \begin{cases} (G-1) & , \quad |\text{Re}\{s_1\}| \le 2G \\ (3G+1) & , \quad |\text{Re}\{s_1\}| > 2G \end{cases}$$

For $3G < |\text{Re}\{s_1\}| \le 5G$ :

$$xCH10 = \text{sgn}(\text{Re}\{s_1\}) \times \begin{cases} (3G-1) & , \quad |\text{Re}\{s_1\}| \le 4G \\ (5G+1) & , \quad |\text{Re}\{s_1\}| > 4G \end{cases}$$

For $5G < |\text{Re}\{s_1\}| \le 7G$ :

$$xCH10 = \text{sgn}(\text{Re}\{s_1\}) \times \begin{cases} (5G-1) & , \quad |\text{Re}\{s_1\}| \le 6G \\ (7G+1) & , \quad |\text{Re}\{s_1\}| > 6G \end{cases}$$

For $7G < |\text{Re}\{s_1\}| \le 9G$ :

$$xCH10 = \text{sgn}(\text{Re}\{s_1\}) \times \begin{cases} (7G-1) & , \quad |\text{Re}\{s_1\}| \le 8G \\ (9G+1) & , \quad |\text{Re}\{s_1\}| > 8G \end{cases}$$

For $9G < |\text{Re}\{s_1\}| \le 11G$ :

$$xCH10 = \text{sgn}(\text{Re}\{s_1\}) \times \begin{cases} (9G-1) & , \quad |\text{Re}\{s_1\}| \le 10G \\ (11G+1) & , \quad |\text{Re}\{s_1\}| > 10G \end{cases}$$

For $11G < |\text{Re}\{s_1\}| \le 13G$ :

$$xCH10 = \text{sgn}(\text{Re}\{s_1\}) \times \begin{cases} (11G-1) & , \quad |\text{Re}\{s_1\}| \le 12G \\ (13G+1) & , \quad |\text{Re}\{s_1\}| > 12G \end{cases}$$

For $13G < |\text{Re}\{s_1\}| \le 15G$ :

$$xCH10 = \text{sgn}(\text{Re}\{s_1\}) \times \begin{cases} (13G-1) & , \quad |\text{Re}\{s_1\}| \le 14G \\ (15G+1) & , \quad |\text{Re}\{s_1\}| > 14G \end{cases}$$

For $15G < |\text{Re}\{s_1\}| \le 17G$ :

$$xCH10 = \text{sgn}(\text{Re}\{s_1\}) \times \begin{cases} (15G-1) & , \quad |\text{Re}\{s_1\}| \le 16G \\ (17G+1) & , \quad |\text{Re}\{s_1\}| > 16G \end{cases}$$

For $17G < |\text{Re}\{s_1\}| \le 19G$ :

$$xCH10 = \text{sgn}(\text{Re}\{s_1\}) \times \begin{cases} (17G-1) & , \quad |\text{Re}\{s_1\}| \le 18G \\ (19G+1) & , \quad |\text{Re}\{s_1\}| > 18G \end{cases}$$

For $19G < |\mathrm{Re}\{s_1\}| \le 21G$ : $\quad xCH10 = \mathrm{sgn}(\mathrm{Re}\{s_1\}) \times \begin{cases} (19G-1), & |\mathrm{Re}\{s_1\}| \le 20G \\ (21G+1), & |\mathrm{Re}\{s_1\}| > 20G \end{cases}$

For $21G < |\mathrm{Re}\{s_1\}| \le 23G$ : $\quad xCH10 = \mathrm{sgn}(\mathrm{Re}\{s_1\}) \times \begin{cases} (21G-1), & |\mathrm{Re}\{s_1\}| \le 22G \\ (23G+1), & |\mathrm{Re}\{s_1\}| > 22G \end{cases}$

For $23G < |\mathrm{Re}\{s_1\}| \le 25G$ : $\quad xCH10 = \mathrm{sgn}(\mathrm{Re}\{s_1\}) \times \begin{cases} (23G-1), & |\mathrm{Re}\{s_1\}| \le 24G \\ (25G+1), & |\mathrm{Re}\{s_1\}| > 24G \end{cases}$

For $25G < |\mathrm{Re}\{s_1\}| \le 27G$ : $\quad xCH10 = \mathrm{sgn}(\mathrm{Re}\{s_1\}) \times \begin{cases} (25G-1), & |\mathrm{Re}\{s_1\}| \le 26G \\ (27G+1), & |\mathrm{Re}\{s_1\}| > 26G \end{cases}$

For $27G < |\mathrm{Re}\{s_1\}| \le 29G$ : $\quad xCH10 = \mathrm{sgn}(\mathrm{Re}\{s_1\}) \times \begin{cases} (27G-1), & |\mathrm{Re}\{s_1\}| \le 28G \\ (29G+1), & |\mathrm{Re}\{s_1\}| > 28G \end{cases}$

For $29G < |\mathrm{Re}\{s_1\}| \le 31G$ : $\quad xCH10 = \mathrm{sgn}(\mathrm{Re}\{s_1\}) \times \begin{cases} (29G-1), & |\mathrm{Re}\{s_1\}| \le 30G \\ (31G+1), & |\mathrm{Re}\{s_1\}| > 30G \end{cases}$

For $|\mathrm{Re}\{s_1\}| > 31G$ : $\qquad xCH10 = \mathrm{sgn}(\mathrm{Re}\{s_1\}) \times (31G-1)$

$$\mathrm{Re}\{\mathbf{CHbit10}_{s1}\} = xCH10$$

ii) **CHbit11**$_{s1}$

For $|\mathrm{Im}\{s_1\}| \le G$ : $\qquad yCH11 = \mathrm{sgn}(\mathrm{Im}\{s_1\}) \times (G+1)$

For $G < |\mathrm{Im}\{s_1\}| \le 3G$ : $\quad yCH11 = \mathrm{sgn}(\mathrm{Im}\{s_1\}) \times \begin{cases} (G-1), & |\mathrm{Im}\{s_1\}| \le 2G \\ (3G+1), & |\mathrm{Im}\{s_1\}| > 2G \end{cases}$

For $3G < |\mathrm{Im}\{s_1\}| \le 5G$ : $\quad yCH11 = \mathrm{sgn}(\mathrm{Im}\{s_1\}) \times \begin{cases} (3G-1), & |\mathrm{Im}\{s_1\}| \le 4G \\ (5G+1), & |\mathrm{Im}\{s_1\}| > 4G \end{cases}$

For $5G < |\text{Im}\{s_1\}| \le 7G$ :
$$yCH11 = \text{sgn}(\text{Im}\{s_1\}) \times \begin{cases} (5G-1) \, , & |\text{Im}\{s_1\}| \le 6G \\ (7G+1) \, , & |\text{Im}\{s_1\}| > 6G \end{cases}$$

For $7G < |\text{Im}\{s_1\}| \le 9G$ :
$$yCH11 = \text{sgn}(\text{Im}\{s_1\}) \times \begin{cases} (7G-1) \, , & |\text{Im}\{s_1\}| \le 8G \\ (9G+1) \, , & |\text{Im}\{s_1\}| > 8G \end{cases}$$

For $9G < |\text{Im}\{s_1\}| \le 11G$ :
$$yCH11 = \text{sgn}(\text{Im}\{s_1\}) \times \begin{cases} (9G-1) \, , & |\text{Im}\{s_1\}| \le 10G \\ (11G+1) \, , & |\text{Im}\{s_1\}| > 10G \end{cases}$$

For $11G < |\text{Im}\{s_1\}| \le 13G$ :
$$yCH11 = \text{sgn}(\text{Im}\{s_1\}) \times \begin{cases} (11G-1) \, , & |\text{Im}\{s_1\}| \le 12G \\ (13G+1) \, , & |\text{Im}\{s_1\}| > 12G \end{cases}$$

For $13G < |\text{Im}\{s_1\}| \le 15G$ :
$$yCH11 = \text{sgn}(\text{Im}\{s_1\}) \times \begin{cases} (13G-1) \, , & |\text{Im}\{s_1\}| \le 14G \\ (15G+1) \, , & |\text{Im}\{s_1\}| > 14G \end{cases}$$

For $15G < |\text{Im}\{s_1\}| \le 17G$ :
$$yCH11 = \text{sgn}(\text{Im}\{s_1\}) \times \begin{cases} (15G-1) \, , & |\text{Im}\{s_1\}| \le 16G \\ (17G+1) \, , & |\text{Im}\{s_1\}| > 16G \end{cases}$$

For $17G < |\text{Im}\{s_1\}| \le 19G$ :
$$yCH11 = \text{sgn}(\text{Im}\{s_1\}) \times \begin{cases} (17G-1) \, , & |\text{Im}\{s_1\}| \le 18G \\ (19G+1) \, , & |\text{Im}\{s_1\}| > 18G \end{cases}$$

For $19G < |\text{Im}\{s_1\}| \le 21G$ :
$$yCH11 = \text{sgn}(\text{Im}\{s_1\}) \times \begin{cases} (19G-1) \, , & |\text{Im}\{s_1\}| \le 20G \\ (21G+1) \, , & |\text{Im}\{s_1\}| > 20G \end{cases}$$

For $21G < |\text{Im}\{s_1\}| \le 23G$ :
$$yCH11 = \text{sgn}(\text{Im}\{s_1\}) \times \begin{cases} (21G-1) \, , & |\text{Im}\{s_1\}| \le 22G \\ (23G+1) \, , & |\text{Im}\{s_1\}| > 22G \end{cases}$$

$$\text{For} \quad 23G < \left|\text{Im}\{s_1\}\right| \le 25G \quad : \quad yCH11 = \text{sgn}(\text{Im}\{s_1\}) \times \begin{cases} (23G-1) \ , & \left|\text{Im}\{s_1\}\right| \le 24G \\[2mm] (25G+1) \ , & \left|\text{Im}\{s_1\}\right| > 24G \end{cases}$$

$$\text{For} \quad 25G < \left|\text{Im}\{s_1\}\right| \le 27G \quad : \quad yCH11 = \text{sgn}(\text{Im}\{s_1\}) \times \begin{cases} (25G-1) \ , & \left|\text{Im}\{s_1\}\right| \le 26G \\[2mm] (27G+1) \ , & \left|\text{Im}\{s_1\}\right| > 26G \end{cases}$$

$$\text{For} \quad 27G < \left|\text{Im}\{s_1\}\right| \le 29G \quad : \quad yCH11 = \text{sgn}(\text{Im}\{s_1\}) \times \begin{cases} (27G-1) \ , & \left|\text{Im}\{s_1\}\right| \le 28G \\[2mm] (29G+1) \ , & \left|\text{Im}\{s_1\}\right| > 28G \end{cases}$$

$$\text{For} \quad 29G < \left|\text{Im}\{s_1\}\right| \le 31G \quad : \quad yCH11 = \text{sgn}(\text{Im}\{s_1\}) \times \begin{cases} (29G-1) \ , & \left|\text{Im}\{s_1\}\right| \le 30G \\[2mm] (31G+1) \ , & \left|\text{Im}\{s_1\}\right| > 30G \end{cases}$$

$$\text{For} \quad \left|\text{Im}\{s_1\}\right| > 31G \quad : \quad yCH11 = \text{sgn}(\text{Im}\{s_1\}) \times (31G-1)$$

$$\text{Im}\{\textbf{CHbit11}_{s1}\} = yCH11$$

## Claims

1. A method of decoding a MIMO signal comprising multiple QAM constellations defining a search space, comprising the steps of:

   determining a vector of the MIMO signal;
   for all possible constellation points in a selected one of the QAM constellations:

   determining a most likely symbol for the vector for each constellation point of another selected constellation within the search space for the vector by determining the nearest symbol;
   determining a distance for the most likely symbol;
   determining selected counter hypothesis symbols related to the most likely symbol; and
   determining for each counter hypothesis symbol a distance from the vector for each of the bit positions in the symbol;

   determining the lowest of the distance values for each of the bit positions in the symbol when the bit is one and when it is zero;
   calculating, using the lowest distance values for each of the bit positions, a likelihood value indicating the relative likelihood that the bit at that position is a zero or one; and
   outputting the likelihood values.

2. A method according to claim 1, wherein the selected counter hypothesis symbols are the symbols that are closest to the most likely symbol in inverted bit sub-space.

3. A method according to claim 2, wherein the inverted bit sub-space are those sub-spaces containing symbols having one bit position of opposite value to the most likely symbol.

4. A method according to claim 2 or 3, wherein the selected counter hypothesis symbols are determined according to the equation of appendix A.

5. A method according to any of claims 1 to 4, wherein the selected one of the QAM constellations is the constellation of the multiple QAM constellations having the smallest number of constellation points.

6. A method according to any preceding claim, wherein the likelihood value is a log-likelihood ratio (LLR).

7. A method according to any preceding claim, wherein the distance from the vector for each of the bit positions in the symbol is the Euclidean distance.

8. A decoder for decoding a MIMO signal comprising multiple QAM constellations defining a search space, comprising:

means for determining a vector of the MIMO signal;
means, for all possible constellation points in a selected one of the QAM constellations, for:

determining a most likely symbol for the vector for each constellation point of another selected constellation within the search space for the vector by determining the nearest symbol;
determining a distance for the most likely symbol;
determining selected counter hypothesis symbols related to the most likely symbol; and
determining for each counter hypothesis symbol a distance from the vector for each of the bit positions in the symbol;

means for determining the lowest of the distance values for each of the bit positions in the symbol when the bit is one and when it is zero;
means for calculating, using the lowest distance values for each of the bit positions, a likelihood value indicating the relative likelihood that the bit at that position is a zero or one; and
means for outputting the likelihood values.

9. A decoder according to claim 8, wherein the selected counter hypothesis symbols are the symbols that are closest to the most likely symbol in inverted bit sub-space.

10. A decoder according to claim 9, wherein the inverted bit sub-space are those sub-spaces containing symbols having one bit position of opposite value to the most likely symbol.

11. A decoder according to claim 9 or 10, wherein the selected counter hypothesis symbols are determined according to the equation of appendix A.

12. A decoder according to any of claims 8 to 11, wherein the selected one of the QAM constellations is the constellation of the multiple QAM constellations having the smallest number of constellation points.

13. A decoder according to any of claims 8 to 12, wherein the likelihood value is a log-likelihood ratio (LLR).

14. A decoder according to any of claims 8 to 13, wherein the distance from the vector for each of the bit positions in the symbol is the Euclidean distance.

15. A computer program comprising code which when executed undertakes the method of any of claims 1 to 7.

**Patentansprüche**

1. Verfahren zum Decodieren eines MIMO-Signals, das mehrere einen Suchraum definierende QAM-Konstellationen umfasst, das die folgenden Schritte beinhaltet:

Bestimmen eines Vektors des MIMO-Signals;
für alle möglichen Konstellationspunkte in einer gewählten der QAM-Konstellationen:

Bestimmen eines wahrscheinlichsten Symbols für den Vektor für jeden Konstellationspunkt einer anderen gewählten Konstellation innerhalb des Suchraums für den Vektor durch Bestimmen des nächstgelegenen Symbols;
Bestimmen einer Distanz für das wahrscheinlichste Symbol;
Bestimmen von gewählten Gegenhypothesesymbolen in Bezug auf das wahrscheinlichste Symbol; und
Bestimmen, für jedes Gegenhypothesesymbol, einer Distanz von dem Vektor für jede der Bitpositionen in dem Symbol;

Bestimmen des niedrigsten der Distanzwerte für jede der Bitpositionen in dem Symbol, wenn das Bit eins ist und wenn es null ist;
Berechnen, anhand der niedrigsten Distanzwerte für jede der Bitpositionen, eines Wahrscheinlichkeitswertes, der die relative Wahrscheinlichkeit anzeigt, dass das Bit in dieser Position eine Null oder eine Eins ist; und
Ausgeben der Wahrscheinlichkeitswerte.

2. Verfahren nach Anspruch 1, wobei die gewählten Gegenhypothesesymbole die Symbole sind, die dem wahrscheinlichsten Symbol im invertierten Bitsubraum am nächsten liegen.

3. Verfahren nach Anspruch 2, wobei der invertierte Bitsubraum diejenigen Subräume sind, die Symbole mit einer Bitposition vom entgegengesetzten Wert zu dem wahrscheinlichsten Symbol haben.

4. Verfahren nach Anspruch 2 oder 3, wobei die gewählten Gegenhypothesesymbole gemäß der Gleichung von Anhang A bestimmt werden.

5. Verfahren nach einem der Ansprüche 1 bis 4, wobei die gewählte der QAM-Konstellationen die Konstellation der mehreren QAM-Konstellationen mit der geringsten Anzahl von Konstellationspunkten ist.

6. Verfahren nach einem vorherigen Anspruch, wobei der Wahrscheinlichkeitswert ein Log-Likelihood-Verhältnis (LLR) ist.

7. Verfahren nach einem vorherigen Anspruch, wobei die Distanz von dem Vektor für jede der Bitpositionen in dem Symbol die euklidische Distanz ist.

8. Decoder zum Decodieren eines MIMO-Signals, das mehrere einen Suchraum definierende QAM-Konstellationen umfasst, der Folgendes umfasst:

Mittel zum Bestimmen eines Vektors des MIMO-Signals;
Mittel, für alle möglichen Konstellationspunkte in einer gewählten der QAM-Konstellationen, zum:

Bestimmen eines wahrscheinlichsten Symbols für den Vektor für jeden Konstellationspunkt einer anderen gewählten Konstellation innerhalb des Suchraums für den Vektor durch Bestimmen des nächstgelegenen Symbols;
Bestimmen einer Distanz für das wahrscheinlichste Symbol;
Bestimmen von gewählten Gegenhypothesesymbolen in Bezug auf das wahrscheinlichste Symbol; und
Bestimmen, für jedes Gegenhypothesesymbol, einer Distanz von dem Vektor für jede der Bitpositionen in dem Symbol;

Mittel zum Bestimmen des niedrigsten der Distanzwerte für jede der Bitpositionen in dem Symbol, wenn das Bit eins ist und wenn es null ist;
Mittel zum Berechnen, anhand der niedrigsten Distanzwerte für jede der Bitpositionen, eines Wahrscheinlichkeitswertes, der die relative Wahrscheinlichkeit anzeigt, dass das Bit an dieser Position eine Null oder eine Eins ist; und
Mittel zum Ausgeben der Wahrscheinlichkeitswerte.

9. Decoder nach Anspruch 8, wobei die gewählten Gegenhypothesesymbole die Symbole sind, die dem wahrscheinlichsten Symbol im invertierten Bitsubraum am nächsten liegen.

10. Decoder nach Anspruch 9, wobei der invertierte Bitsubraum diejenigen Subräume sind, die Symbole mit einer Bitposition des entgegengesetzten Wertes zu dem wahrscheinlichsten Symbol enthalten.

11. Decoder nach Anspruch 9 oder 10, wobei die gewählten Gegenhypothesesymbole gemäß der Gleichung von Anhang A bestimmt werden.

12. Decoder nach einem der Ansprüche 8 bis 11, wobei die gewählte der QAM-Konstellationen die Konstellation der mehreren QAM-Konstellationen mit der geringsten Anzahl von Konstellationspunkten ist.

13. Decoder nach einem der Ansprüche 8 bis 12, wobei der Wahrscheinlichkeitswert ein Log-Likelihood-Verhältnis (LLR) ist.

14. Decoder nach einem der Ansprüche 8 bis 13, wobei die Distanz von dem Vektor für jede der Bitpositionen in dem Symbol die euklidische Distanz ist.

15. Computerprogramm, das Code umfasst, der bei Ausführung das Verfahren nach einem der Ansprüche 1 bis 7 durchführt.

**Revendications**

1. Procédé de décodage d'un signal MIMO comprenant de multiples constellations QAM qui définissent un espace de recherche, comprenant les étapes de :

   détermination d'un vecteur du signal MIMO ;
   pour tous les points de constellation possibles dans une constellation sélectionnée des constellations QAM :

      détermination d'un symbole le plus probable pour le vecteur de chaque point de constellation d'une autre constellation sélectionnée dans l'espace de recherche du vecteur par détermination du symbole le plus proche ;
      détermination d'une distance du symbole le plus probable ;
      détermination de symboles de contre-hypothèse sélectionnés relatifs au symbole le plus probable ; et
      détermination pour chaque symbole de contre-hypothèse d'une distance depuis le vecteur pour chacune des positions binaires dans le symbole ;

   détermination de la plus basse des valeurs de distance pour chacune des positions de bit dans le symbole quand le bit est un et quand il est zéro ;
   calcul, en utilisant les plus basses valeurs de distance pour chacune des positions de bit, d'une valeur de vraisemblance indiquant la vraisemblance relative que le bit à cette position est un zéro ou un ; et
   production en sortie des valeurs de vraisemblance.

2. Procédé selon la revendication 1, dans lequel les symboles de contre-hypothèse sélectionnés sont les symboles les plus proches du symbole le plus probable dans un sous-espace de bit inversé.

3. Procédé selon la revendication 2, dans lequel le sous-espace de bit inversé est composé des sous-espaces qui contiennent des symboles ayant une position de bit de valeur opposée à celle du symbole le plus probable.

4. Procédé selon la revendication 2 ou 3, dans lequel les symboles de contre-hypothèse sélectionnés sont déterminés en fonction de l'équation de l'annexe A.

5. Procédé selon l'une quelconque des revendications 1 à 4, dans lequel la constellation sélectionnée des constellations QAM est la constellation des multiples constellations QAM qui présente le plus petit nombre de points de constellation.

6. Procédé selon n'importe quelle revendication précédente, dans lequel la valeur de vraisemblance est un logarithme du rapport de vraisemblance (LLR).

7. Procédé selon n'importe quelle revendication précédente, dans lequel la distance par rapport au vecteur pour chacune des positions de bit dans le symbole est la distance euclidienne.

8. Décodeur pour décoder un signal MIMO comprenant de multiples constellations QAM qui définissent un espace de recherche, comprenant:

un moyen de détermination d'un vecteur du signal MIMO ;

des moyens, pour tous les points de constellation possibles dans une constellation sélectionnée des constellations QAM, de :

détermination d'un symbole le plus probable pour le vecteur de chaque point de constellation d'une autre constellation sélectionnée dans l'espace de recherche du vecteur par détermination du symbole le plus proche ;

détermination d'une distance du symbole le plus probable ;

détermination de symboles de contre-hypothèse sélectionnés relatifs au symbole le plus probable ; et

détermination pour chaque symbole de contre-hypothèse d'une distance depuis le vecteur pour chacune des positions binaires dans le symbole ;

un moyen de détermination de la plus basse des valeurs de distance pour chacune des positions de bit dans le symbole quand le bit est un et quand il est zéro ;

un moyen de calcul, en utilisant les plus basses valeurs de distance pour chacune des positions de bit, d'une valeur de vraisemblance indiquant la vraisemblance relative que le bit à cette position est un zéro ou un ; et

un moyen de production en sortie des valeurs de vraisemblance.

9. Décodeur selon la revendication 8, dans lequel les symboles de contre-hypothèse sélectionnés sont les symboles les plus proches du symbole le plus probable dans un sous-espace de bit inversé.

10. Décodeur selon la revendication 9, dans lequel le sous-espace de bit inversé est composé des sous-espaces qui contiennent des symboles ayant une position de bit de valeur opposée à celle du symbole le plus probable.

11. Décodeur selon la revendication 9 ou 10, dans lequel les symboles de contre-hypothèse sélectionnés sont déterminés en fonction de l'équation de l'annexe A.

12. Décodeur selon l'une quelconque des revendications 8 à 11, dans lequel la constellation sélectionnée des constellations QAM est la constellation des multiples constellations QAM qui présente le plus petit nombre de points de constellation.

13. Décodeur selon l'une quelconque des revendications 8 à 12, dans lequel la valeur de vraisemblance est un logarithme du rapport de vraisemblance (LLR).

14. Décodeur selon l'une quelconque des revendications 8 à 13, dans lequel la distance par rapport au vecteur pour chacune des positions de bit dans le symbole est la distance euclidienne.

15. Programme informatique comprenant le code qui, à son exécution, entreprend le procédé selon l'une quelconque des revendications 1 à 7.

**Figure 1**: 2x2 MIMO System

**Figure 2**: 3D Tree Diagram of a 16-QAM 2x2 MIMO search-space

**Figure 3**: 16-QAM constellation

**Figure 4**: 2x2 16-QAM MIMO search-space

**Figure 5**: Layer 2 bit mapping

**Figure 6**: Layer 1 bit mapping

**Figure 7:** Sub-space for $D^{(bit\,0_{s1}=0)}$

**Figure 8:** Sub-space for $D^{(bit\,1_{s1}=0)}$

**Figure 9:** Sub-space for $D^{(bit\,2_{s1}=0)}$

**Figure 10:** Sub-space for $D^{(bit\,3_{s1}=0)}$

**Figure 11:** Sub-space for $D^{(bit0_{s2}=0)}$

**Figure 12:** Sub-space for $D^{(bit1_{s2}=0)}$

**Figure 13:** Sub-space for $D^{(bit2_{s2}=0)}$

**Figure 14:** Sub-space for $D^{(bit3_{s2}=0)}$

**Figure 15 :** Example of slicing $\hat{s}_1$ to $s_l$

**Figure 16 :** Location of nearest CH points for a given $s_l$

10

1)  List all $s_2$ points in increasing bit order
2)  Set LLR metric table (LMT) with $\infty$ in all cells
3)  Set idx = 1

26

12

Select $s_2$(idx)

Calculate $PD_2{}^2$ using (12.2)

14

Find $\hat{s_1}$ using (17)

16

Map $\hat{s_1}$ to the nearest constellation point, $s_1$, using (18.1) and (18.2)

Calculate $PD_1{}^2$ using (12.1)

28

18

Find all the nearest counter-hypothesis points for $s_1$ as shown in section 3.1.2

Calculate $PD_1{}_{\text{CHbit0}}{}^2$, $PD_1{}_{\text{CHbit1}}{}^2, \ldots, PD_1{}_{\text{CHbitB}}{}^2$ using (19)

30

20

Sum all the Euclidean distances; $EDist_{ML}{}^2$, $EDist_{CH0s1}{}^2$, $EDist_{CH1s1}{}^2$, using equation (12.3) and (19)

22

Update the appropriate cells in LMT

24

idx = idx + 1

idx ≤ M          idx > M

Terminate algorithm

**Figure 17:** Algorithm flow diagram

**EP 2 597 835 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1221793 A
- EP 1821481 A

- EP 2158736 A

**Non-patent literature cited in the description**

- **JIANPENG YU et al.** *Parallel SFSD MIMO detection with SOFT-HARD combination enumeration*